(19) Europäisches Patentamt
European Patent Office
Office européen des brevets

(11) **EP 4 592 717 A1**

(12) **EUROPEAN PATENT APPLICATION**

(43) Date of publication:
**30.07.2025 Bulletin 2025/31**

(21) Application number: **25152820.4**

(22) Date of filing: **20.01.2025**

(51) International Patent Classification (IPC):
**G02B 1/115** (2015.01)     **G02B 1/118** (2015.01)
**G02B 5/02** (2006.01)

(52) Cooperative Patent Classification (CPC):
**G02B 1/118; G02B 1/115; G02B 5/0215**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **25.01.2024 US 202463624819 P**

(71) Applicant: **Largan Precision Co. Ltd.
Taichung City 408 (TW)**

(72) Inventors:
• **Tsai, Wen-Yu
408 Taichung City (TW)**

• **Fan, Chen-Wei
408 Taichung City (TW)**
• **Chou, Ming-Ta
408 Taichung City (TW)**
• **Chang, Chien-Pang
408 Taichung City (TW)**
• **Chu, Kuo-Chiang
408 Taichung City (TW)**

(74) Representative: **Lippert Stachow Patentanwälte
Rechtsanwälte
Partnerschaft mbB
Frankenforster Strasse 135-137
51427 Bergisch Gladbach (DE)**

(54) **IMAGING LENS ASSEMBLY AND ELECTRONIC DEVICE**

(57)     An imaging lens assembly includes an optical element and an anti-reflecting film. An imaging light passes through the optical element, and the optical element has a gate trace. The anti-reflecting film is disposed on at least portion of a surface of the optical element, and includes a nanostructure layer and an intermediate layer. The nanostructure layer includes a plurality of ridge-like protrusions extending non-directionally. The intermediate layer is disposed between the optical element and the nanostructure layer, and includes at least two first medium layers and at least one second medium layer, wherein a refractive index of the at least one second medium layer is different from a refractive index of each of the at least two first medium layers, and the at least one second medium layer is disposed between the at least two first medium layers.

Fig. 1B

EP 4 592 717 A1

**Description**

**BACKGROUND**

Technical Field

The present disclosure relates to an imaging lens assembly. More particularly, the present disclosure relates to an imaging lens assembly applicable to portable electronic devices.

Description of Related Art

In the recent years, portable electronic devices have developed rapidly. For example, intelligent electronic devices and tablets have been filled in the lives of modern people, and imaging lens assemblies mounted on portable electronic devices have also prospered. However, as technology advances, the quality requirements of the imaging lens assemblies are becoming higher and higher. Therefore, an imaging lens assembly, which can improve an environmental tolerance of an anti-reflecting film so as to keep a low reflectivity, needs to be developed.

**SUMMARY**

According to one aspect of the present disclosure, an imaging lens assembly includes an optical element and an anti-reflecting film. An imaging light passes through the optical element, and the optical element has a gate trace. The anti-reflecting film is disposed on at least portion of a surface of the optical element, and includes a nanostructure layer and an intermediate layer. The nanostructure layer includes a plurality of ridge-like protrusions extending non-directionally, wherein a bottom of each of the ridge-like protrusions is closer to the optical element than a top of each of the ridge-like protrusions to the optical element, and each of the ridge-like protrusions is tapered from the bottom towards the top. The intermediate layer is disposed between the optical element and the nanostructure layer, and includes at least two first medium layers and at least one second medium layer, wherein a refractive index of the at least one second medium layer is different from a refractive index of each of the at least two first medium layers, and the at least one second medium layer is disposed between the at least two first medium layers. When a thickness of each of the at least two first medium layers is LT1, and a thickness of the at least one second medium layer is LT2, the following conditions are satisfied: 42 nm < LT1 < 112 nm; and 1 nm < LT2 < 35 nm.

According to the imaging lens assembly of the aforementioned aspect, wherein the thickness of each of the at least two first medium layers is LT1, and the following condition is satisfied: 45 nm < LT1 < 90 nm.

According to the imaging lens assembly of the aforementioned aspect, wherein the thickness of the at least one second medium layer is LT2, and the following condition is satisfied: 3 nm < LT2 < 27 nm.

According to the imaging lens assembly of the aforementioned aspect, wherein the intermediate layer further includes at least one third medium layer. A refractive index of the at least one third medium layer is different from the refractive index of the at least one second medium layer, and the at least one third medium layer is disposed adjacent to the at least one second medium layer. A thickness of the at least one third medium layer is LT3, and the following condition is satisfied: 3 nm < LT3 < 38 nm.

According to the imaging lens assembly of the aforementioned aspect, wherein the thickness of each of the at least two first medium layers is LT1, the thickness of the at least one third medium layer is LT3, and the following condition is satisfied: 2.3 < LT1/LT3 < 9.6.

According to the imaging lens assembly of the aforementioned aspect, wherein the refractive index of the at least one second medium layer is higher than the refractive index of each of the at least two first medium layers, and the refractive index of the at least one second medium layer is higher than the refractive index of the at least one third medium layer.

According to the imaging lens assembly of the aforementioned aspect, wherein a portion of a top of the intermediate layer is exposed to an air.

According to the imaging lens assembly of the aforementioned aspect, wherein an average height of the ridge-like protrusions is larger than 78 nm and less than 308 nm.

According to the imaging lens assembly of the aforementioned aspect, wherein a main component of the nanostructure layer is aluminum oxide.

According to the imaging lens assembly of the aforementioned aspect, wherein a main component of each of the at least two first medium layers is silicon oxide.

According to the imaging lens assembly of the aforementioned aspect, wherein a main component of the at least one second medium layer is titanium oxide.

According to the imaging lens assembly of the aforementioned aspect, wherein a main component of the at least one third medium layer is silicon oxide.

According to the imaging lens assembly of the aforementioned aspect, wherein an average reflectivity of the at least portion of the surface of the optical element with the nanostructure layer corresponding to a light with a wavelength from 420 nm to 760 nm is R4276, and the following condition is satisfied: 0% < R4276 < 0.2%.

According to the imaging lens assembly of the aforementioned aspect, wherein the average reflectivity of the at least portion of the surface of the optical element with the nanostructure layer corresponding to the light with the wavelength from 420 nm to 760 nm is R4276, and the following condition is satisfied: 0% < R4276 < 0.1%.

According to the imaging lens assembly of the aforementioned aspect, wherein the optical element includes a light diminishing structure configured to form an unevenness on a surface of the optical element. The light diminishing structure and the optical element are formed integrally.

According to the imaging lens assembly of the aforementioned aspect, wherein the light diminishing structure includes a plurality of protrusions, and the protrusions are arranged regularly.

According to the imaging lens assembly of the aforementioned aspect, wherein a height of each of the protrusions is larger than 40 $\mu$m and less than 1000 $\mu$m.

According to the imaging lens assembly of the aforementioned aspect, wherein the height of each of the protrusions is larger than 50 $\mu$m and less than 500 $\mu$m.

According to the imaging lens assembly of the aforementioned aspect, the imaging lens assembly further includes an adhering component configured to fix the optical element.

According to one aspect of the present disclosure, an electronic device includes the imaging lens assembly of the aforementioned aspect.

## BRIEF DESCRIPTION OF THE DRAWINGS

The present disclosure can be more fully understood by reading the following detailed description of the embodiment, with reference made to the accompanying drawings as follows:

Fig. 1A is a schematic view of an imaging lens assembly according to the 1st Example of the present disclosure.

Fig. 1B is a three-dimensional view of the optical element and an anti-reflecting film according to the 1st Example in Fig. 1A.

Fig. 1C is a cross-sectional view of the optical element and the anti-reflecting film according to the 1st Example in Fig. 1A.

Fig. 1D is a top view of the optical element and the anti-reflecting film according to the 1st Example in Fig. 1A.

Fig. 1E is a schematic view of the optical element and the anti-reflecting film according to the 1st Example in Fig. 1A.

Fig. 1F is a scanning electron microscope image of the anti-reflecting film according to the 1st Example in Fig. 1A.

Fig. 1G is a cross-sectional view of the optical element and the anti-reflecting film according to the 1st Example in Fig. 1A.

Fig. 1H is a reflectivity diagram of the imaging lens assembly according to the 1st Example in Fig. 1A.

Fig. 2A is a schematic view of an imaging lens assembly according to the 2nd Example of the present disclosure.

Fig. 2B is a three-dimensional view of the optical element and an anti-reflecting film according to the 2nd Example in Fig. 2A.

Fig. 2C is a schematic view of the optical element and the anti-reflecting film according to the 2nd Example in Fig. 2A.

Fig. 3A is a schematic view of an imaging lens assembly according to the 3rd Example of the present disclosure.

Fig. 3B is a three-dimensional view of an object side of the optical element and an anti-reflecting film according to the 3rd Example in Fig. 3A.

Fig. 3C is a three-dimensional view of an image side of the optical element and an anti-reflecting film according to the 3rd Example in Fig. 3A.

Fig. 3D is a schematic view of the optical element and the anti-reflecting films according to the 3rd Example in Fig. 3A.

Fig. 4A is a schematic view of an imaging lens assembly according to the 4th Example of the present disclosure.

Fig. 4B is a schematic view of the optical element and an anti-reflecting film according to the 4th Example in Fig. 4A.

Fig. 5A is a schematic view of an imaging lens assembly according to the 5th Example of the present disclosure.

Fig. 5B is a schematic view of the optical element and an anti-reflecting film according to the 5th Example in Fig. 5A.

Fig. 6A is a schematic view of an electronic device according to the 6th Example of the present disclosure.

Fig. 6B is another schematic view of the electronic device according to the 6th Example in Fig. 6A.

Fig. 6C is a schematic view of an image captured via the electronic device according to the 6th Example in Fig. 6A.

Fig. 6D is a schematic view of another image captured via the electronic device according to the 6th Example in Fig. 6A.

Fig. 6E is a schematic view of another image captured via the electronic device according to the 6th Example in Fig. 6A.

Fig. 7 is a schematic view of an electronic device according to the 7th Example of the present disclosure.

Fig. 8A is a schematic view of an imaging lens assembly applied to a vehicle according to the 8th Example of the present disclosure.

Fig. 8B is another schematic view of the imaging lens assemblies configured on the vehicle according to the 8th Example in Fig. 8A.

Fig. 8C is another schematic view of the imaging lens assemblies configured on the vehicle according to the 8th Example in Fig. 8A.

## DETAILED DESCRIPTION

The present disclosure provides an imaging lens assembly, which includes an optical element and an anti-reflecting film. An imaging light passes through the optical element, and the optical element has a gate trace. The anti-reflecting film is disposed on at least portion of a surface of the optical element, and includes a nanostructure layer and an intermediate layer. The nanostructure layer includes a plurality of ridge-like protrusions extending non-directionally, wherein a bottom of each of the ridge-like protrusions is closer to the optical element than a top of each of the ridge-like protrusions to the optical element, and each of the ridge-like protrusions is tapered from the bottom towards the top. The intermediate layer is disposed between the optical element and the nanostructure layer, and includes at least two first medium layers and at least one second medium layer, wherein a refractive index of the at least one second medium layer is different from a refractive index of each of the at least two first medium layers, and the at least one second medium layer is disposed between the at least two first medium layers. When a thickness of each of the at least two first medium layers is LT1, and a thickness of the at least one second medium layer is LT2, the following conditions are satisfied: $42\ nm < LT1 < 112\ nm$; and $1\ nm < LT2 < 35\ nm$.

It is favorable for improving a structural stability of the anti-reflecting film by satisfying the aforementioned configuration with the intermediate layer, so that an environmental tolerance of the anti-reflecting film can be increased so as to keep a low reflectivity of the anti-reflecting film. Moreover, the reflectivity can be decreased through forming a gradient reflectivity by the ridge-like protrusions, wherein the environmental changes can be temperature, humidity or other chemical interference, but the present disclosure is not limited thereto.

Furthermore, the optical element can be an optical lens element or a prism element, but the present disclosure is not limited thereto. Further, a mark generated after heating and melting the material of the optical element can be observed through the gate trace, or the fluidity of the material of the optical element during heating and melting can be observed through the gate trace. The gate trace can be a mark formed with the specific spatial geometric features in the specific spatial geometric space, such as a cutting trace formed in a runner during injection molding, and the gate trace can be also called the runner trace, but the present disclosure is not limited thereto, and the idiomatic expression is not limited thereto.

A portion of a top of the intermediate layer can be exposed to an air. Therefore, it is favorable for adjusting the variation of a gradient reflectivity of the nanostructure layer.

The intermediate layer can further include at least one third medium layer, wherein a refractive index of the at least one third medium layer is different from the refractive index of the at least one second medium layer, and the at least one third medium layer is disposed adjacent to the at least one second medium layer. When a thickness of the at least one third medium layer is LT3, the following condition is satisfied: 3 nm < LT3 < 38 nm. Therefore, the reflectivity can be decreased by forming the thin film interference with the third medium layer and the second medium layer.

The refractive index of the at least one second medium layer can be higher than the refractive index of each of the at least two first medium layers, and the refractive index of the at least one second medium layer can be higher than the refractive index of the at least one third medium layer.

A main component of the nanostructure layer can be aluminum oxide.

A main component of each of the at least two first medium layers can be silicon oxide. Therefore, the film layer stability can be improved.

A main component of the at least one second medium layer can be titanium oxide. Therefore, the reflectivity can be decreased by forming the thin film interference with the second medium layer and the first medium layers, or by forming the thin film interference with the second medium layer and the third medium layer.

A main component of the at least one third medium layer can be silicon oxide.

Moreover, the first medium layers, the second medium layer and the third medium layer of the intermediate layer can be formed by stacking combinations of $SiO_2$, $MgF_2$, $TiO_2$, $Ta_2O_5$, $Cr_2O_3$, $HfO_2$, $ZnO$, $AlN$, $Al_2O_3$, $Y_2O_3$, $CaF_2$, $SiC$, $MgO$ and $ZrO_2$. The element proportions of the compounds above are not limited to the present disclosure, and can be different with different production processes.

The optical element can include a light diminishing structure, wherein the light diminishing structure is configured to form an unevenness on a surface of the optical element, and the light diminishing structure and the optical element are formed integrally. The reflection of the stray light can be reduced through the unevenness. In detail, the light diminishing structure can be formed in the optical element through the mold design, and the light diminishing structure can be disposed outside the optical effective area.

The light diminishing structure can include a plurality of protrusions, and the protrusions are arranged regularly. Therefore, it is favorable for the quality management of the light diminishing structure.

The imaging lens assembly can further include an adhering component, wherein the adhering component is configured to fix the optical element. Therefore, it is favorable for improving the assembling stability. In detail, the adhering component can be mixed with dark color pigments so as to reduce the reflectivity of the adhering component.

When the thickness of each of the at least two first medium layers is LT1, the following condition can be satisfied: 45 nm < LT1 < 90 nm. Therefore, it is favorable for improving the environmental tolerance of an anti-reflecting film.

When the thickness of the at least one second medium layer is LT2, the following condition can be satisfied: 3 nm < LT2 < 27 nm.

When the thickness of each of the at least two first medium layers is LT1, and the thickness of the at least one third medium layer is LT3, the following condition can be satisfied: 2.3 < LT1/LT3 < 9.6. Therefore, it is favorable for improving the environmental tolerance and the anti-reflecting efficiency of the anti-reflecting film.

An average height of the ridge-like protrusions can be larger than 78 nm and less than 308 nm. In detail, heights of the ridge-like protrusions can be different, the average height of the ridge-like protrusions can be calculated according to at least three of the ridge-like protrusions or more ridge-like protrusions, and the average height of the ridge-like protrusions can be calculated preferably according to the ridge-like protrusions with identifiable outlines. Moreover, the height of each of the ridge-like protrusions can be the vertical height from the absolute bottom (mountain foot part) of one of the ridge-like protrusions to the top (mountain top part) of the one of the ridge-like protrusions with observing the cross-section (destructive measurement).

When an average reflectivity of the at least portion of the surface of the optical element with the nanostructure layer corresponding to a light with a wavelength from 420 nm to 760 nm is R4276, the following condition can be satisfied: 0% < R4276 < 0.2%. Therefore, it is favorable for improving the transmittance and reducing the reflection of the stray light. Furthermore, the following condition can be satisfied: 0% < R4276 < 0.1%.

A height of each of the protrusions can be larger than 40 $\mu$m and less than 1000 $\mu$m. Therefore, it is favorable for prevent the stray light from being reflected to the image surface. Moreover, the height of each of the protrusions can be larger than 50 $\mu$m and less than 500 $\mu$m.

Each of the aforementioned features of the imaging lens assembly can be utilized in various combinations for achieving the corresponding effects.

The present disclosure provides an electronic device that includes the aforementioned imaging lens assembly.

According to the aforementioned descriptions, specific embodiments and specific examples are provided, and illustrated via figures.

<1st Example>

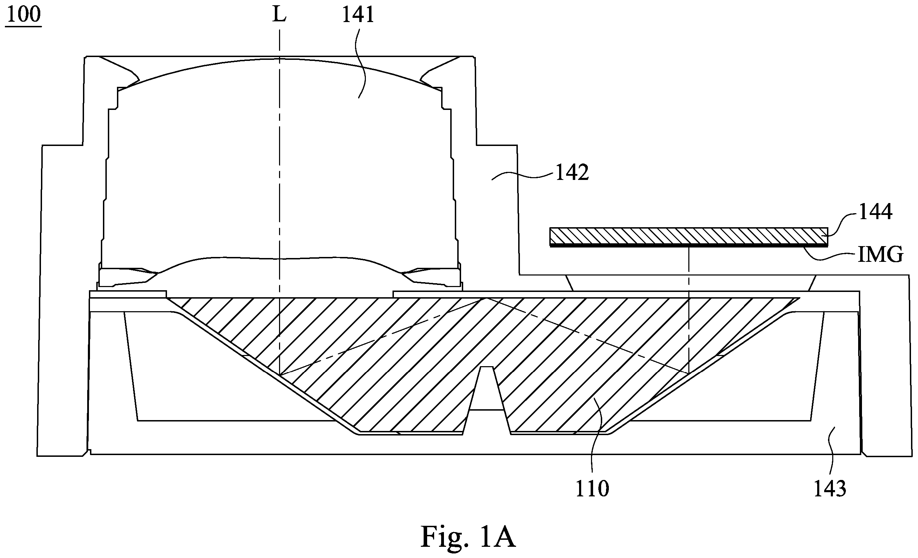

Fig. 1A is a schematic view of an imaging lens assembly 100 according to the 1st Example of the present disclosure. In Fig. 1A, the imaging lens assembly 100 includes an optical element 110, wherein an imaging light L passes through the optical element 110, and the optical element 110 is a prism element, but the present disclosure is not limited thereto.

Moreover, according to the 1st Example, the imaging lens assembly 100 is a telephoto imaging lens assembly, and the imaging lens assembly 100 can further include an optical lens element 141, a lens barrel 142, an assembling element 143 and an image sensor 144, wherein the lens barrel 142 is configured to accommodate the optical element 110 and the optical lens element 141, the assembling element 143 is configured to fix the optical element 110, the image sensor 144 is disposed on an image surface IMG of the imaging lens assembly 100, and the image sensor 144 is configured to receive the imaging light L.

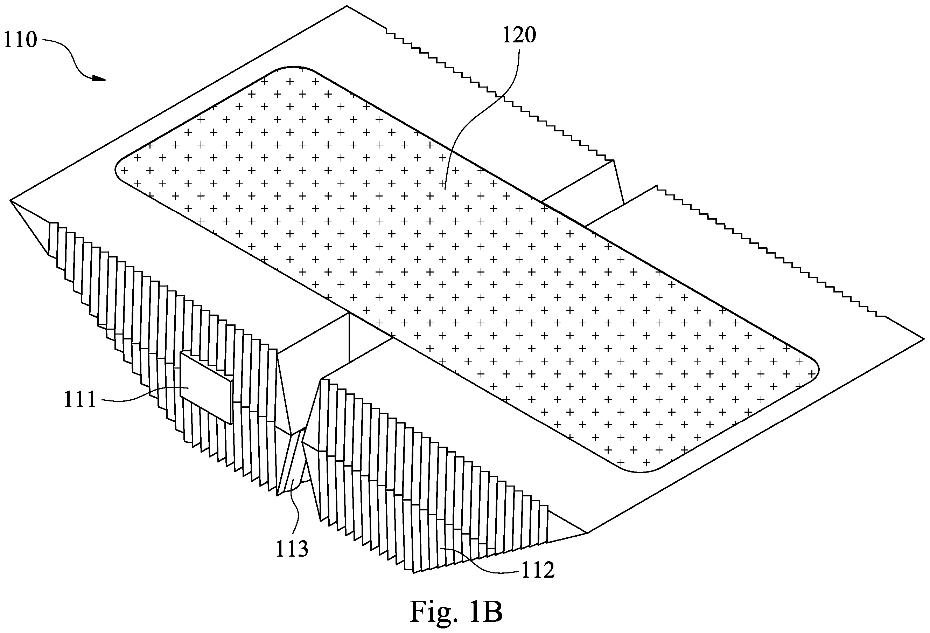

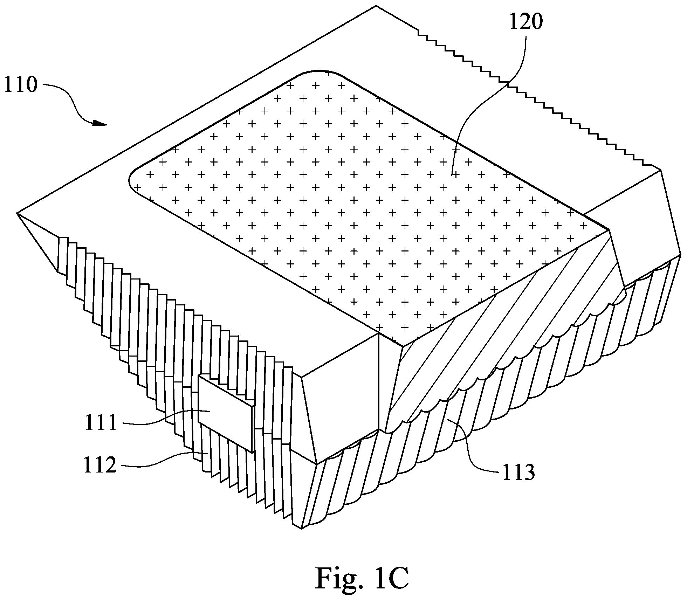

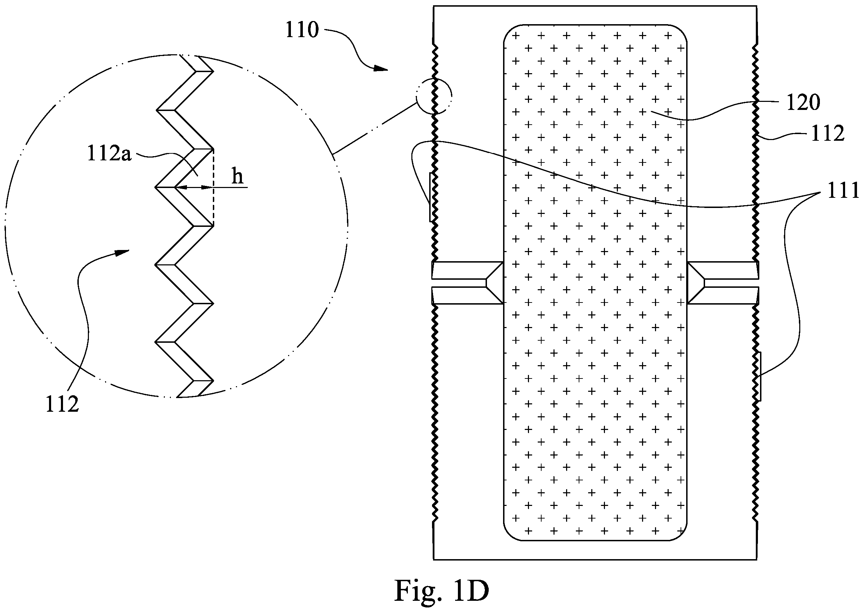

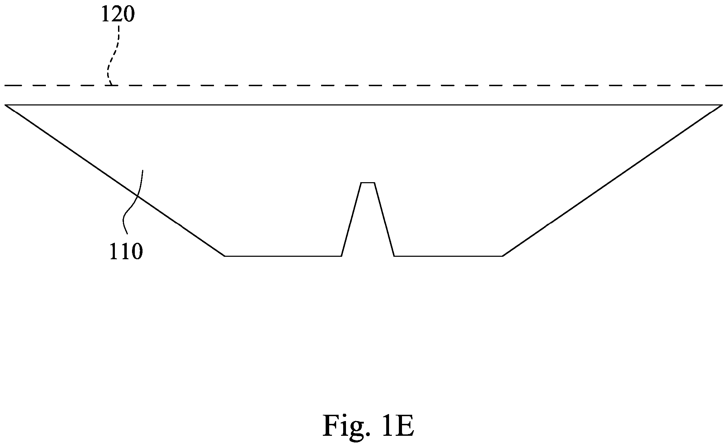

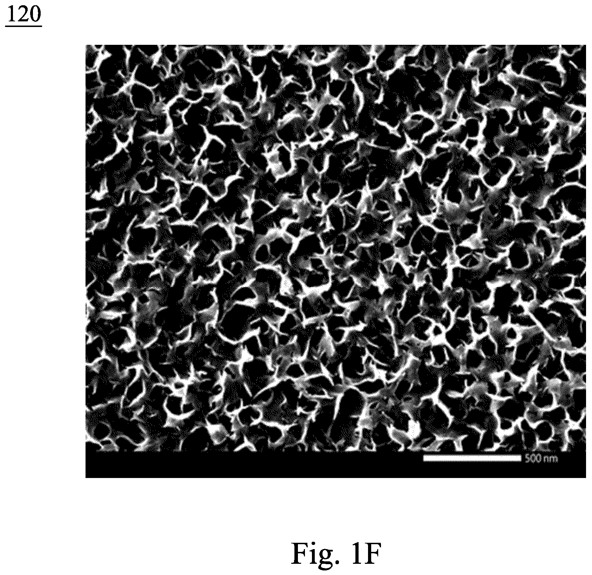

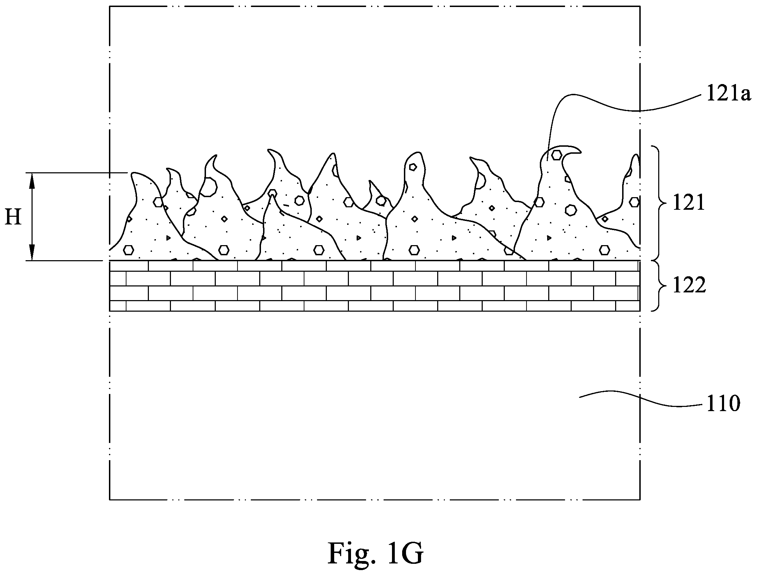

Fig. 1B is a three-dimensional view of the optical element 110 and an anti-reflecting film 120 according to the 1st Example in Fig. 1A, Fig. 1C is a cross-sectional view of the optical element 110 and the anti-reflecting film 120 according to the 1st Example in Fig. 1A, Fig. 1D is a top view of the optical element 110 and the anti-reflecting film 120 according to the 1st Example in Fig. 1A, Fig. 1E is a schematic view of the optical element 110 and the anti-reflecting film 120 according to the 1st Example in Fig. 1A, Fig. 1F is a scanning electron microscope image of the anti-reflecting film 120 according to the 1st Example in Fig. 1A, and Fig. 1G is a cross-sectional view of the optical element 110 and the anti-reflecting film 120 according to the 1st Example in Fig. 1A. In Fig. 1B to Fig. 1G, the imaging lens assembly 100 can further include the anti-reflecting film 120, wherein the anti-reflecting film 120 is disposed on at least portion of a surface of the optical element 110, the anti-reflecting film 120 includes a nanostructure layer 121 and an intermediate layer 122, and the optical element 110 has a gate trace 111. It should be mentioned that the dotted line in Fig. 1E is configured to indicate the range of the anti-reflecting film 120.

Furthermore, the nanostructure layer 121 includes a plurality of ridge-like protrusions 121a extending non-directionally, wherein a bottom of each of the ridge-like protrusions 121a is closer to the optical element 110 than a top of each of the ridge-like protrusions 121a to the optical element 110, and each of the ridge-like protrusions 121a is tapered from the bottom towards the top. The intermediate layer 122 is disposed between the optical element 110 and the nanostructure layer 121, and includes at least two first medium layers and at least one second medium layer, wherein a refractive index of the at least one second medium layer is different from a refractive index of each of the at least two first medium layers, and the at least one second medium layer is disposed between the at least two first medium layers.

It is favorable for improving the structural stability of the anti-reflecting film 120 by satisfying the aforementioned configuration with the intermediate layer 122, so that the environmental tolerance of the anti-reflecting film 120 can be increased so as to keep a low reflectivity of the anti-reflecting film 120. Moreover, the reflectivity can be decreased through forming a gradient reflectivity by the ridge-like protrusions 121a, wherein the environmental changes can be temperature, humidity or other chemical interference, but the present disclosure is not limited thereto.

In detail, a mark generated after heating and melting the material of the optical element 110 can be observed through the gate trace 111, or the fluidity of the material of the optical element 110 during heating and melting can be observed through the gate trace 111. The gate trace 111 can be a mark formed with the specific spatial geometric features in the specific spatial geometric space, such as a cutting trace formed in a runner during injection molding, and the gate trace 111 can be also called the runner trace, but the present disclosure is not limited thereto, and the idiomatic expression is not limited thereto.

In Fig. 1C, the optical element 110 having a gate trace 111 can be designed with a more complicated shape via the mold. For example, an aperture in the element can be partially reduced so as to reduce the chance of the stray light passing through the aperture.

A main component of the nanostructure layer 121 can be aluminum oxide, a main component of each of the at least two first medium layers can be silicon oxide, and a main component of the at least one second medium layer can be titanium oxide. Therefore, the film layer stability can be improved, and the reflectivity can be decreased by forming the thin film interference with the second medium layer and the first medium layers.

In Fig. 1G, the vertical height of each of the ridge-like protrusions 121a is H, wherein heights of the ridge-like protrusions 121a can be different, the average height of the ridge-like protrusions 121a can be calculated according to at least three of the ridge-like protrusions 121a or more ridge-like protrusions 121a, and the average height of the ridge-like protrusions 121a can be calculated preferably according to the ridge-like protrusions 121a with identifiable outlines. Moreover, the height of each of the ridge-like protrusions 121a can be the vertical height H from the absolute bottom (mountain foot part) of one of the ridge-like protrusions 121a to the top (mountain top part) of the one of the ridge-like protrusions 121a with observing the cross-section (destructive measurement). In the 1st Example, the average height of the ridge-like protrusions 121a is 200 nm.

In Fig. 1B to Fig. 1D, the optical element 110 can include light diminishing structures 112, 113, wherein the light diminishing structures 112, 113 are configured to form an unevenness on a surface of the optical element 110, and the light diminishing structures 112, 113 and the optical element 110 are formed integrally. The reflection of the stray light can be reduced through the unevenness. In detail, the light diminishing structures 112, 113 can be formed in the optical element 110 through the mold design, and the light diminishing structures 112, 113 can be disposed outside the optical effective area.

In Fig. 1C, the light diminishing structure 113 can include a plurality of protrusions, and the protrusions are arranged regularly, wherein the protrusions are arc-shaped, and a height of each of the protrusions is 150 $\mu$m.

In Fig. 1D, the light diminishing structure 112 can include a plurality of protrusions 112a, and the protrusions 112a are arranged regularly, wherein the protrusions 112a are triangular, a height of each of the protrusions 112a is h, and the height h of each of the protrusions 112a is 100 $\mu$m. Therefore, it is favorable for the quality management of the light diminishing structures 112, 113 via the protrusions 112a of the light diminishing structure 112 and the protrusions of the light diminishing structure 113.

In Fig. 1G, a portion of a top of the intermediate layer 122 can be exposed to an air. Therefore, it is favorable for adjusting the variation of a gradient reflectivity of the nanostructure layer 121.

The intermediate layer 122 can further include at least one third medium layer, and a main component of the at least one third medium layer can be silicon oxide, wherein a refractive index of the at least one third medium layer is different from the refractive index of the at least one second medium layer, and the at least one third medium layer is disposed adjacent to the at least one second medium layer. The refractive index of the at least one second medium layer can be higher than the refractive index of each of the at least two first medium layers, and the refractive index of the at least one second medium layer can be higher than the refractive index of the at least one third medium layer. Therefore, the reflectivity can be decreased by forming the thin film interference with the third medium layer and the second medium layer.

Moreover, the first medium layers, the second medium layer and the third medium layer of the intermediate layer 122 can be formed by stacking combinations of $SiO_2$, $MgF_2$, $TiO_2$, $Ta_2O_5$, $Cr_2O_3$, $HfO_2$, $ZnO$, $AlN$, $Al_2O_3$, $Y_2O_3$, $CaF_2$, $SiC$, $MgO$ and $ZrO_2$. The element proportions of the compounds above are not limited to the present disclosure, and can be different with different production processes.

Table 1 shows the composition of the intermediate layer 122 of the 1st Example and the location of the intermediate layer 122 relative to the nanostructure layer 121 and the optical element 110, wherein the intermediate layer 122 in Table 1 can be corresponded to the arrangement of the intermediate layer 122, the nanostructure layer 121 and the optical element 110 in Fig. 1G, and Table 1 further shows the components and the thicknesses of the first medium layers, the second medium layer and the third medium layer, respectively.

| Table 1, 1st Example | | |
|---|---|---|
| nanostructure layer | | |
| third medium layer | $SiO_2$ | 18 nm |
| second medium layer | $TiO_2$ | 6 nm |
| first medium layer | $SiO_2$ | 58 nm |
| second medium layer | $TiO_2$ | 13 nm |
| first medium layer | $SiO_2$ | 54 nm |
| second medium layer | $TiO_2$ | 7 nm |
| third medium layer | $SiO_2$ | 8 nm |
| optical element | | |

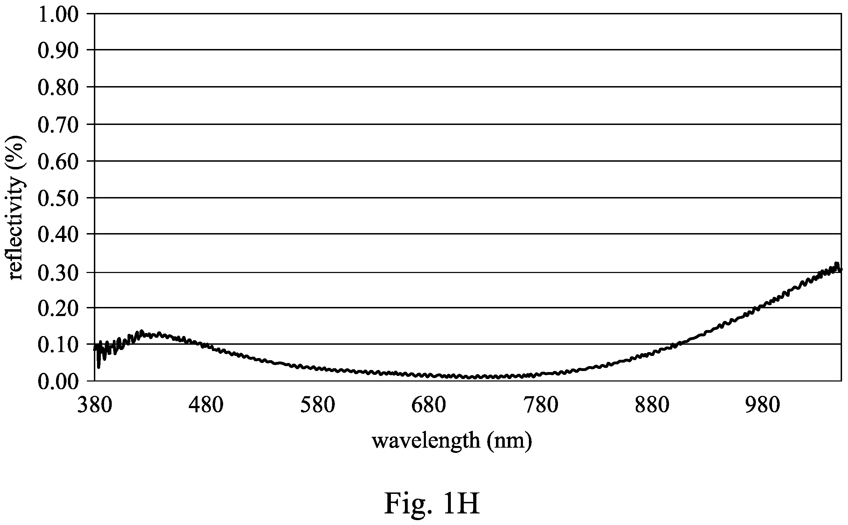

Fig. 1H is a reflectivity diagram of the imaging lens assembly 100 according to the 1st Example in Fig. 1A. In Fig. 1H, an average reflectivity of the at least portion of the surface of the optical element 110 with the nanostructure layer 121 corresponding to a light with a wavelength from 420 nm to 760 nm is R4276, wherein the average reflectivity R4276 of the 1st Example is 0.049%.

<2nd Example>

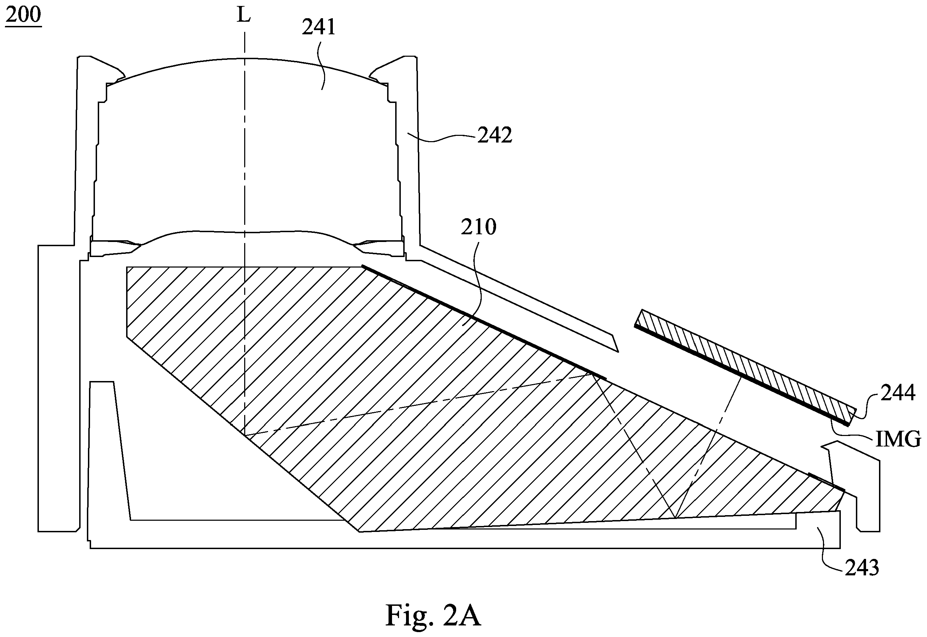

Fig. 2A is a schematic view of an imaging lens assembly 200 according to the 2nd Example of the present disclosure. In Fig. 2A, the imaging lens assembly 200 includes an optical element 210, wherein an imaging light L passes through the optical element 210, and the optical element 210 is a prism element, but the present disclosure is not limited thereto.

Moreover, the imaging lens assembly 200 of the 2nd Example is a telephoto imaging lens assembly, and the imaging lens assembly 200 can further include an optical lens element 241, a lens barrel 242, an assembling element 243 and an image sensor 244, wherein the lens barrel 242 is configured to accommodate the optical element 210 and the optical lens element 241, the assembling element 243 is configured to fix the optical element 210, the image sensor 244 is disposed on an image surface IMG of the imaging lens assembly 200, and the image sensor 244 is configured to receive the imaging light L.

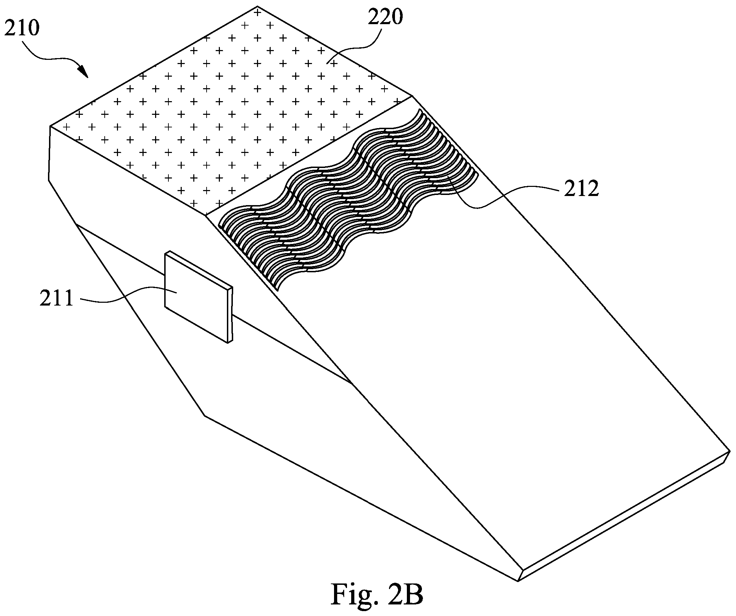

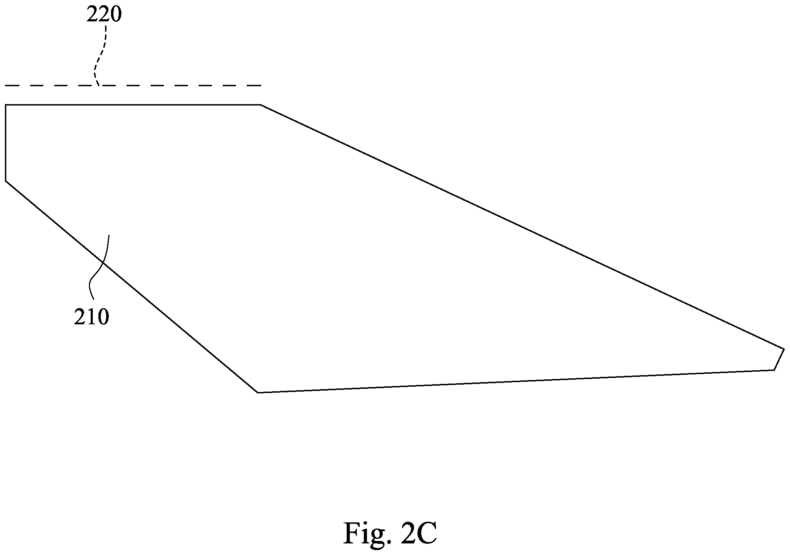

Fig. 2B is a three-dimensional view of the optical element 210 and an anti-reflecting film 220 according to the 2nd Example in Fig. 2A, and Fig. 2C is a schematic view of the optical element 210 and the anti-reflecting film 220 according to the 2nd Example in Fig. 2A. In Fig. 2B and Fig. 2C, the imaging lens assembly 200 can further include the anti-reflecting film 220, wherein the anti-reflecting film 220 is disposed on at least portion of a surface of the optical element 210, the anti-reflecting film 220 includes a nanostructure layer and an intermediate layer, and the optical element 210 has a gate trace 211. It should be mentioned that the dotted line in Fig. 2C is configured to indicate the range of the anti-reflecting film 220.

Furthermore, the nanostructure layer includes a plurality of ridge-like protrusions extending non-directionally, wherein a bottom of each of the ridge-like protrusions is closer to the optical element 210 than a top of each of the ridge-like protrusions to the optical element 210, and each of the ridge-like protrusions is tapered from the bottom towards the top. The intermediate layer is disposed between the optical element 210 and the nanostructure layer, and includes at least two first medium layers and at least one second medium layer, wherein a refractive index of the at least one second medium layer is different from a refractive index of each of the at least two first medium layers, and the at least one second medium layer is disposed between the at least two first medium layers.

In Fig. 2B, the optical element 210 can include a light diminishing structure 212, wherein the light diminishing structure 212 is configured to form an unevenness on a surface of the optical element 210, and the light diminishing structure 212 and the optical element 210 are formed integrally.

In detail, the light diminishing structure 212 can include a plurality of protrusions, and the protrusions are arranged regularly, wherein the protrusions are arc-shaped, the protrusions extend along an S-shaped path, and a height of each of the protrusions is 300 $\mu$m.

Table 2 shows the composition of the intermediate layer of the 2nd Example and the location of the intermediate layer relative to the nanostructure layer and the optical element 210, wherein Table 2 further shows the thicknesses of the first medium layers and the second medium layer, respectively.

| Table 2, 2nd Example | |
|---|---|
| nanostructure layer | |
| first medium layer | 77 nm |
| second medium layer | 27 nm |
| first medium layer | 86 nm |
| optical element | |

<3rd Example>

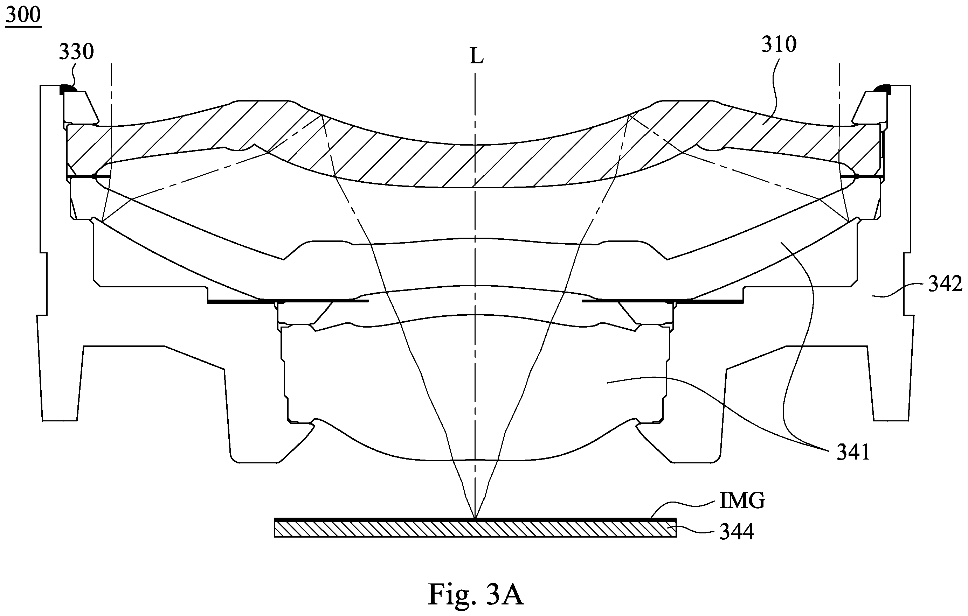

Fig. 3A is a schematic view of an imaging lens assembly 300 according to the 3rd Example of the present disclosure. In Fig. 3A, the imaging lens assembly 300 includes an optical element 310, wherein an imaging light L passes through the optical element 310, and the optical element 310 is an optical lens element, but the present disclosure is not limited thereto.

Moreover, the imaging lens assembly 300 of the 3rd Example is a telephoto imaging lens assembly, and the imaging lens assembly 300 can further include an optical lens element 341, a lens barrel 342 and an image sensor 344, wherein the lens barrel 342 is configured to accommodate the optical element 310 and the optical lens element 341, the image sensor 344 is disposed on an image surface IMG of the imaging lens assembly 300, and the image sensor 344 is configured to receive the imaging light L.

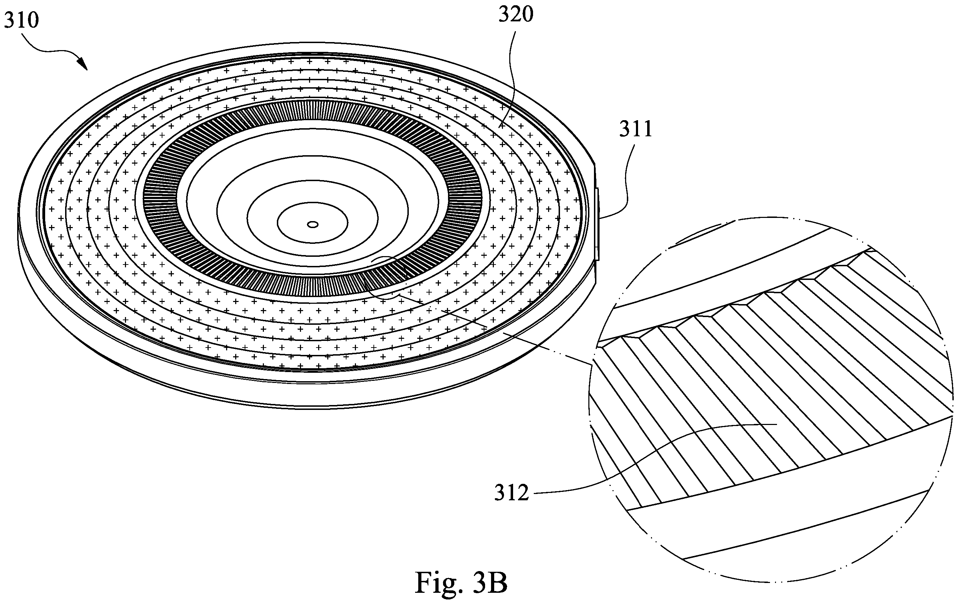

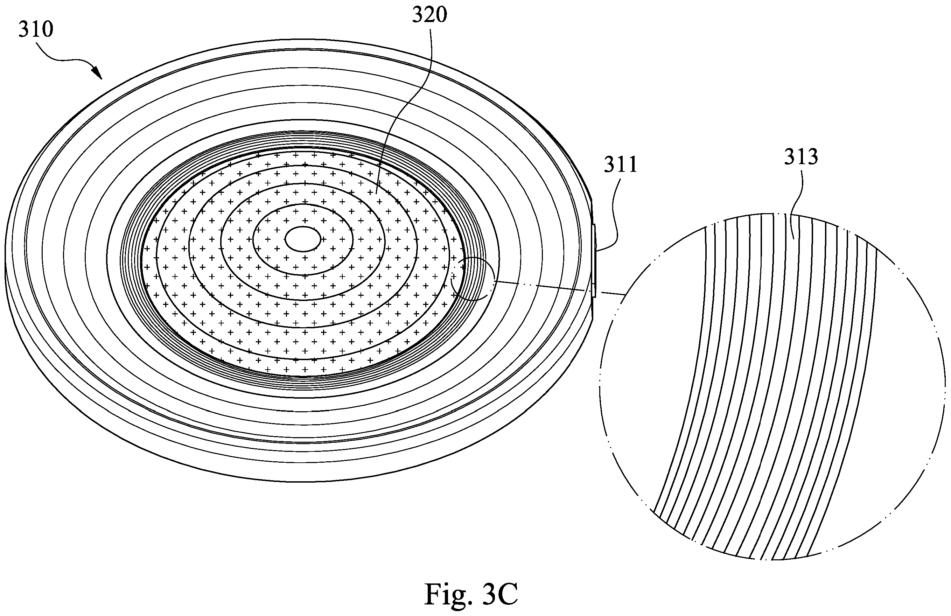

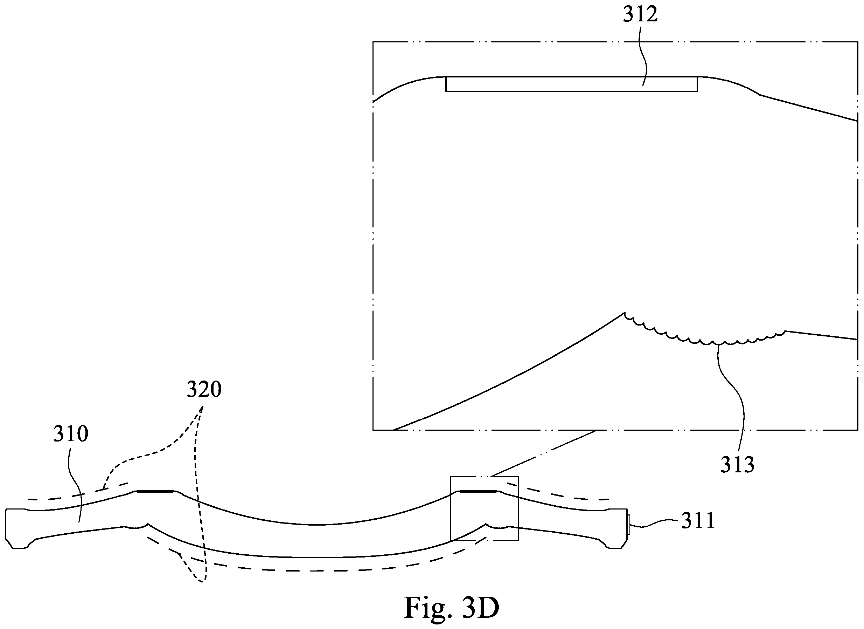

Fig. 3B is a three-dimensional view of an object side of the optical element 310 and an anti-reflecting film 320 according to the 3rd Example in Fig. 3A, Fig. 3C is a three-dimensional view of an image side of the optical element 310 and an anti-reflecting film 320 according to the 3rd Example in Fig. 3A, and Fig. 3D is a schematic view of the optical element 310 and the anti-reflecting films 320 according to the 3rd Example in Fig. 3A. In Fig. 3B to Fig. 3D, the imaging lens assembly 300 can further include the anti-reflecting films 320, wherein the anti-reflecting films 320 are disposed on at least portion of surfaces of the optical element 310, each of the anti-reflecting films 320 includes a nanostructure layer and an intermediate layer, and the optical element 310 has a gate trace 311. It should be mentioned that the dotted lines in Fig. 3D are configured to indicate the range of the anti-reflecting films 320, wherein the anti-reflecting films 320 are disposed on a peripheral area of the object side of the optical element 310 and a central area of the image side of the optical element 310, respectively.

The nanostructure layer includes a plurality of ridge-like protrusions extending non-directionally, wherein a bottom of each of the ridge-like protrusions is closer to the optical element 310 than a top of each of the ridge-like protrusions to the optical element 310, and each of the ridge-like protrusions is tapered from the bottom towards the top. The intermediate layer is disposed between the optical element 310 and the nanostructure layer, and includes at least two first medium layers and at least one second medium layer, wherein a refractive index of the at least one second medium layer is different from a refractive index of each of the at least two first medium layers, and the at least one second medium layer is disposed between the at least two first medium layers. Moreover, the intermediate layer can further include at least one third medium layer, wherein a refractive index of the at least one third medium layer is different from the refractive index of the at least one second medium layer, and the at least one third medium layer is disposed adjacent to the at least one second medium layer. The refractive index of the at least one second medium layer can be higher than the refractive index of each of the at least two first medium layers, and the refractive index of the at least one second medium layer can be higher than the refractive index of the at least one third medium layer.

In Fig. 3A, the imaging lens assembly 300 can further include an adhering component 330, wherein the adhering component 330 is configured to fix the optical element 310. Therefore, it is favorable for improving the assembling stability. In detail, the adhering component 330 can be mixed with dark color pigments so as to reduce the reflectivity of the adhering component 330.

The optical element 310 can include light diminishing structures 312, 313, wherein the light diminishing structures 312, 313 are configured to form an unevenness on a surface of the optical element 310, and the light diminishing structures 312, 313 and the optical element 310 are formed integrally.

In Fig. 3B, the light diminishing structure 312 can include a plurality of protrusions, and the protrusions are arranged regularly, wherein the protrusions are triangular, a height of each of the protrusions is 75 $\mu$m.

In Fig. 3C, the light diminishing structure 313 can include a plurality of protrusions, and the protrusions are arranged regularly, wherein the protrusions are arc-shaped, the protrusions are arranged in concentric circles, and a height of each of the protrusions is 50 $\mu$m.

Table 3 shows the composition of the intermediate layer of the 3rd Example and the location of the intermediate layer relative to the nanostructure layer and the optical element 310, wherein Table 3 further shows the thicknesses of the first medium layers, the second medium layer and the third medium layer, respectively.

| Table 3, 3rd Example | |
| --- | --- |
| nanostructure layer | |
| first medium layer | 98 nm |
| second medium layer | 21 nm |
| first medium layer | 47 nm |
| second medium layer | 15 nm |
| first medium layer | 56 nm |
| second medium layer | 9 nm |
| third medium layer | 12 nm |
| optical element | |

<4th Example>

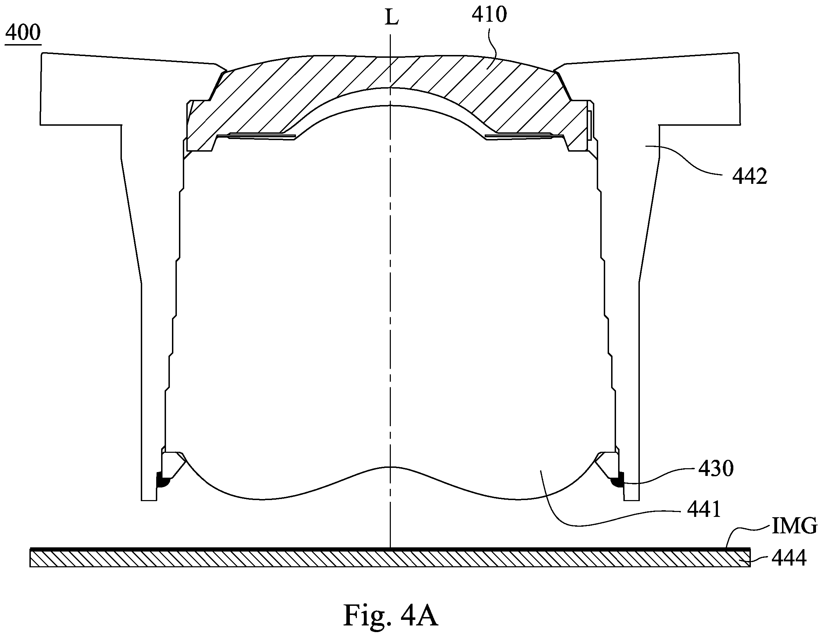

Fig. 4A is a schematic view of an imaging lens assembly 400 according to the 4th Example of the present disclosure. In Fig. 4A, the imaging lens assembly 400 includes an optical element 410, wherein an imaging light L passes through the optical element 410, and the optical element 410 is an optical lens element, but the present disclosure is not limited thereto.

Moreover, the imaging lens assembly 400 of the 4th Example is an ultra-wide angle imaging lens assembly, and the imaging lens assembly 400 can further include an optical lens element 441, a lens barrel 442 and an image sensor 444, wherein the lens barrel 442 is configured to accommodate the optical element 410 and the optical lens element 441, the image sensor 444 is disposed on an image surface IMG of the imaging lens assembly 400, and the image sensor 444 is configured to receive the imaging light L.

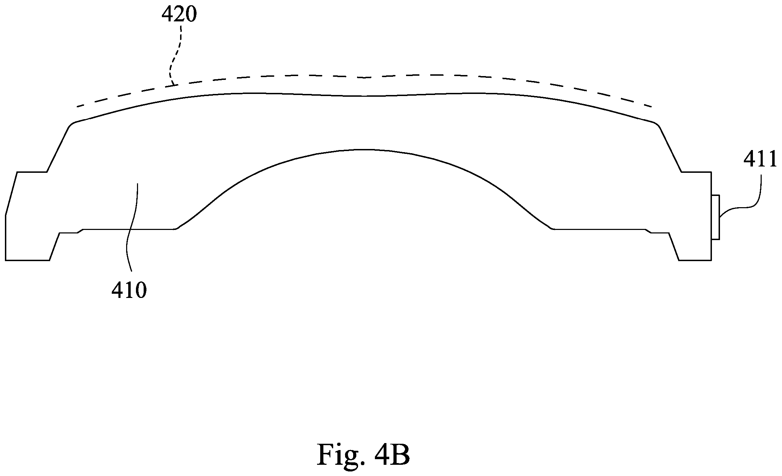

Fig. 4B is a schematic view of the optical element 410 and an anti-reflecting film 420 according to the 4th Example in Fig. 4A. In Fig, 4B, the imaging lens assembly 400 can further include the anti-reflecting film 420, wherein the anti-reflecting film 420 is disposed on at least portion of a surface of the optical element 410, the anti-reflecting film 420 includes a nanostructure layer and an intermediate layer, and the optical element 410 has a gate trace 411. It should be mentioned that the dotted line in Fig. 4B is configured to indicate the range of the anti-reflecting film 420.

Furthermore, the nanostructure layer includes a plurality of ridge-like protrusions extending non-directionally, wherein a bottom of each of the ridge-like protrusions is closer to the optical element 410 than a top of each of the ridge-like protrusions to the optical element 410, and each of the ridge-like protrusions is tapered from the bottom towards the top. The intermediate layer is disposed between the optical element 410 and the nanostructure layer, and includes at least two first medium layers and at least one second medium layer, wherein a refractive index of the at least one second medium layer is different from a refractive index of each of the at least two first medium layers, and the at least one second medium layer is disposed between the at least two first medium layers.

In Fig. 4A, the imaging lens assembly 400 can further include an adhering component 430, wherein the adhering component 430 is configured to fix the optical element 410.

<5th Example>

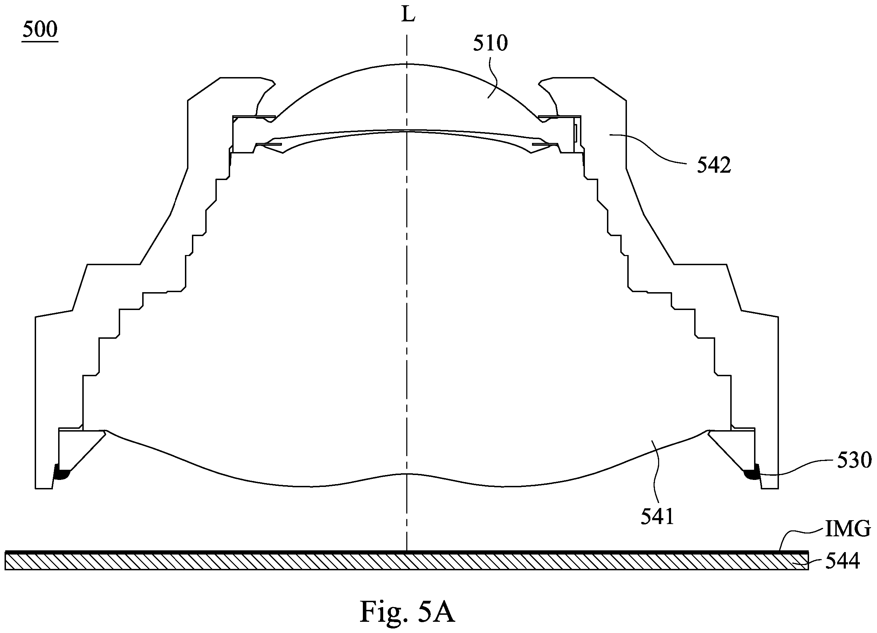

Fig. 5A is a schematic view of an imaging lens assembly 500 according to the 5th Example of the present disclosure. In Fig. 5A, the imaging lens assembly 500 includes an optical element 510, wherein an imaging light L passes through the optical element 510, and the optical element 510 is an optical lens element, but the present disclosure is not limited thereto.

Moreover, the imaging lens assembly 500 of the 5th Example is a wide angle imaging lens assembly, and the imaging lens assembly 500 can further include an optical lens element 541, a lens barrel 542 and an image sensor 544, wherein the lens barrel 542 is configured to accommodate the optical element 510 and the optical lens element 541, the image sensor 544 is disposed on an image surface IMG of the imaging lens assembly 500, and the image sensor 544 is configured to receive the imaging light L.

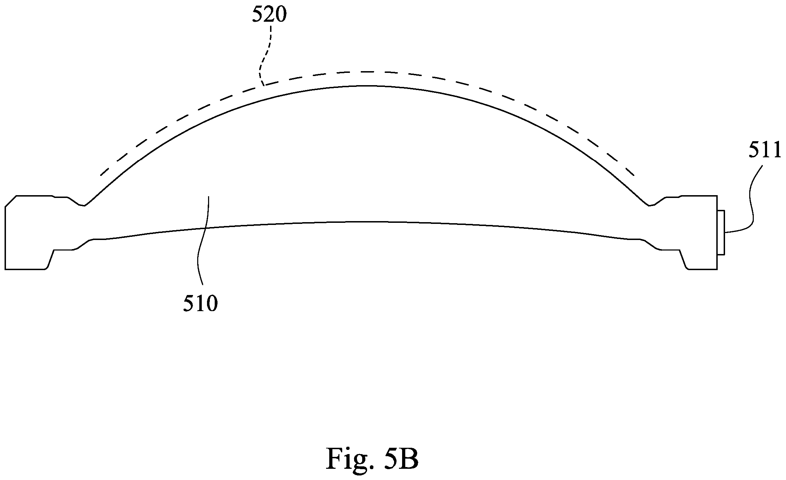

Fig. 5B is a schematic view of the optical element 510 and an anti-reflecting film 520 according to the 5th Example in Fig. 5A. In Fig. 5B, the imaging lens assembly 500 can further include the anti-reflecting film 520, wherein the anti-reflecting film 520 is disposed on at least portion of a surface of the optical element 510, the anti-reflecting film 520 includes a nanostructure layer and an intermediate layer, and the optical element 510 has a gate trace 511. It should be mentioned that the dotted line in Fig. 5B is configured to indicate the range of the anti-reflecting film 520.

Furthermore, the nanostructure layer includes a plurality of ridge-like protrusions extending non-directionally, wherein a bottom of each of the ridge-like protrusions is closer to the optical element 510 than a top of each of the ridge-like protrusions to the optical element 510, and each of the ridge-like protrusions is tapered from the bottom towards the top. The intermediate layer is disposed between the optical element 510 and the nanostructure layer, and includes at least two first medium layers and at least one second medium layer, wherein a refractive index of the at least one second medium layer is different from a refractive index of each of the at least two first medium layers, and the at least one second medium layer is disposed between the at least two first medium layers.

In Fig. 5A, the imaging lens assembly 500 can further include an adhering component 530, wherein the adhering component 530 is configured to fix the optical element 510.

<6th Example>

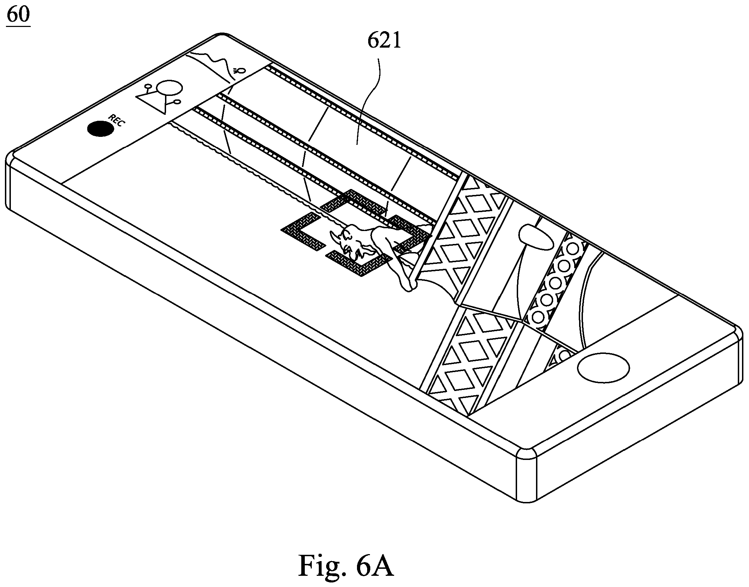

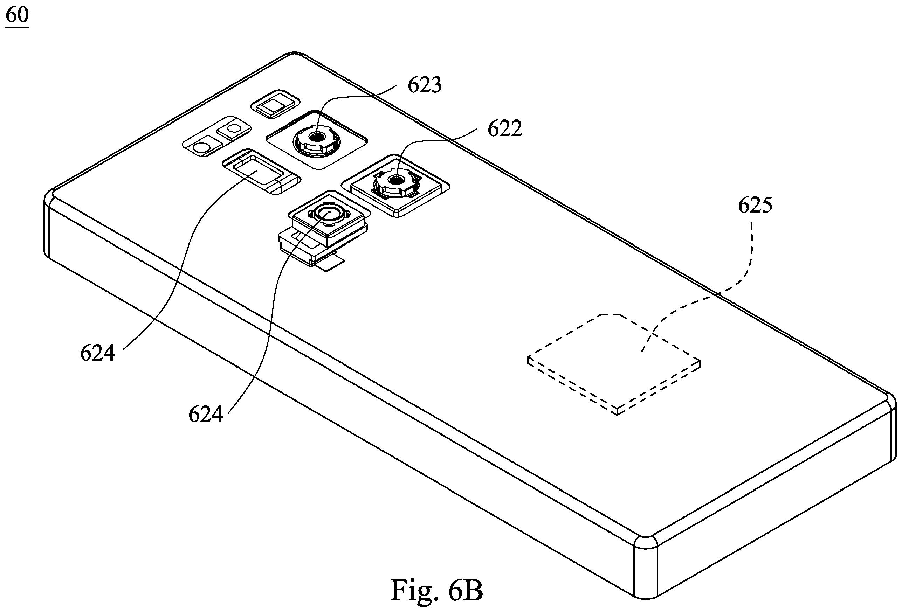

Fig. 6A is a schematic view of an electronic device 60 according to the 6th Example of the present disclosure, and Fig. 6B is another schematic view of the electronic device 60 according to the 6th Example in Fig. 6A. In Fig. 6A and Fig. 6B, the electronic device 60 is a smart phone, and the electronic device 60 includes imaging lens assemblies. Moreover, the imaging lens assemblies are an ultra-wide angle imaging lens assembly 622, a high resolution imaging lens assembly 623 and a telephoto imaging lens assembly 624, and a user interface 621 is a touch screen, but the present disclosure is not limited thereto. Particularly, the imaging lens assembly can be the imaging lens assembly according to any one of the aforementioned 1st Example to the 5th Example, but the present disclosure is not limited thereto.

The user interface 621 has a touch function, a user enters a shooting mode via the user interface 621, wherein the user interface 621 is configured to display an image, and the shooting angle can be manually adjusted to switch to different imaging lens assemblies. At this moment, the imaging light is gathered on an image sensor, and an electronic signal about an image is output to an image signal processor (ISP) 625.

In Fig. 6B, in order to meet a camera specification of the electronic device 60, the electronic device 60 can further include an optical anti-shake mechanism (not shown). Furthermore, the electronic device 60 can further include at least one focusing assisting module (not shown) and at least one sensing element (not shown). The focusing assisting module can be a flash module (not shown) for compensating a color temperature, an infrared distance measurement component, a laser focus module and so on. The sensing element can have functions for sensing physical momentum and kinetic energy, such as an accelerator, a gyroscope, a Hall Effect element, to sense shaking or jitters applied by hands of the users or external environments. Accordingly, the imaging lens assembly of the electronic device 60 equipped with an auto-focusing mechanism and the optical anti-shake mechanism can be enhanced to achieve the superior image quality. Furthermore, the electronic device 60 according to the present disclosure can have a capturing function with multiple modes, such as taking optimized selfies, high dynamic range (HDR) under a low light condition, 4K resolution recording and so on. Furthermore, the user can visually see a captured image of the camera via the user interface 621 and manually operate the view finding range on the user interface 621 to achieve the autofocus function of what you see is what you get.

Moreover, the imaging lens assembly, the optical anti-shake mechanism, the sensing element and the focusing assisting module can be disposed on a flexible printed circuit board (FPC) (not shown) and electrically connected to the image signal processor 625 and other related components, via a connector (not shown) to perform a capturing process. Since the current electronic devices, such as smart phones, have a tendency of being compact, the way of firstly disposing the imaging lens assembly and related components on the flexible printed circuit board and secondly integrating the circuit thereof into the main board of the electronic device via the connector can satisfy the requirements of the mechanical design and the circuit layout of the limited space inside the electronic device, and obtain more margins. The autofocus function of the imaging lens assembly can also be controlled more flexibly via the touch screen of the electronic device. According to the 6th Example, the electronic device 60 can include a plurality of sensing elements and a plurality of focusing assisting modules. The sensing elements and the focusing assisting modules are disposed on the flexible printed circuit board and at least one other flexible printed circuit board (not shown) and electrically connected to the image signal processor 625 and other related components, via corresponding connectors to perform the capturing process. In other embodiments (not shown), the sensing elements and the focusing assisting modules can also be disposed on the main board of the electronic device or carrier boards of other types according to requirements of the mechanical design and the circuit layout.

Furthermore, the electronic device 60 can further include, but not be limited to, a display, a control unit, a storage unit, a random access memory (RAM), a read-only memory (ROM), or the combination thereof.

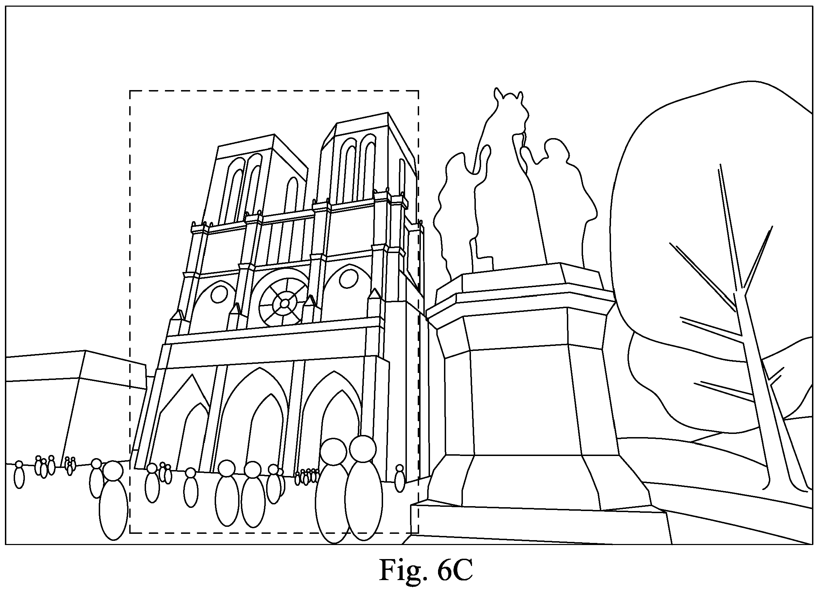

Fig. 6C is a schematic view of an image captured via the electronic device 60 according to the 6th Example in Fig. 6A. In Fig. 6C, the larger range of the image can be captured via the ultra-wide angle imaging lens assembly 622, and the ultra-wide angle imaging lens assembly 622 has the function of accommodating wider range of the scene.

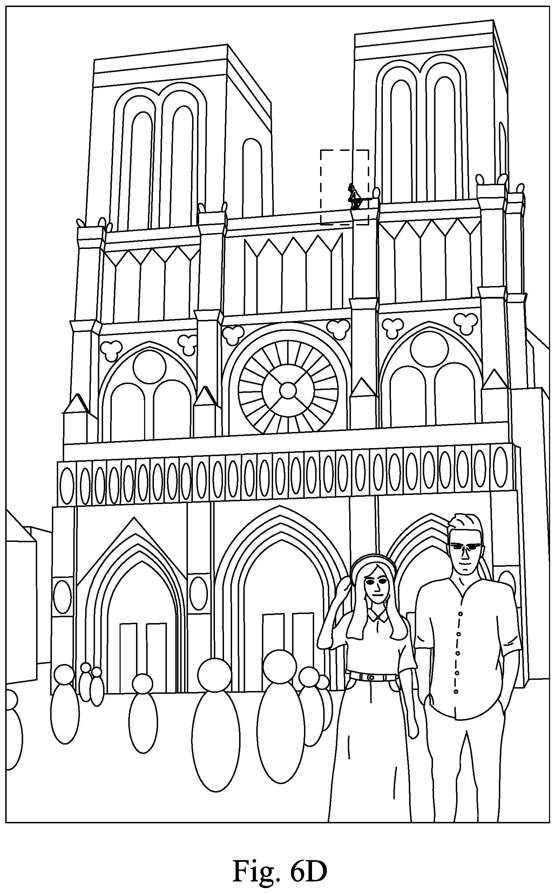

Fig. 6D is a schematic view of another image captured via the electronic device 60 according to the 6th Example in Fig. 6A. In Fig. 6D, the image of the certain range with the high resolution can be captured via the high resolution imaging lens assembly 623, and the high resolution imaging lens assembly 623 has the function of the high resolution and the low deformation.

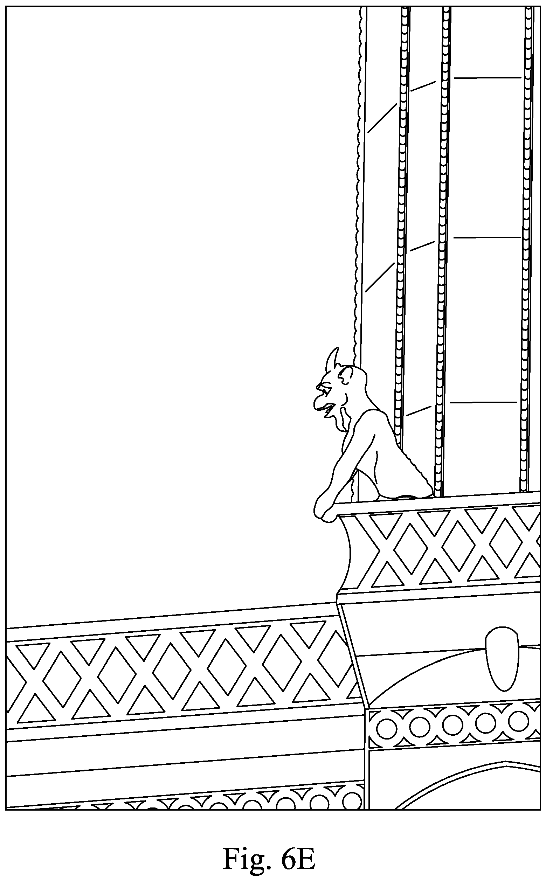

Fig. 6E is a schematic view of another image captured via the electronic device 60 according to the 6th Example in Fig. 6A. In Fig. 6E, the telephoto imaging lens assembly 624 has the enlarging function of the high magnification, and the distant image can be captured and enlarged with high magnification via the telephoto imaging lens assembly 624.

In Fig. 6C to Fig. 6E, the zooming function can be obtained via the electronic device 60, when the scene is captured via the imaging lens assembly with different focal lengths cooperated with the function of image processing.

<7th Example>

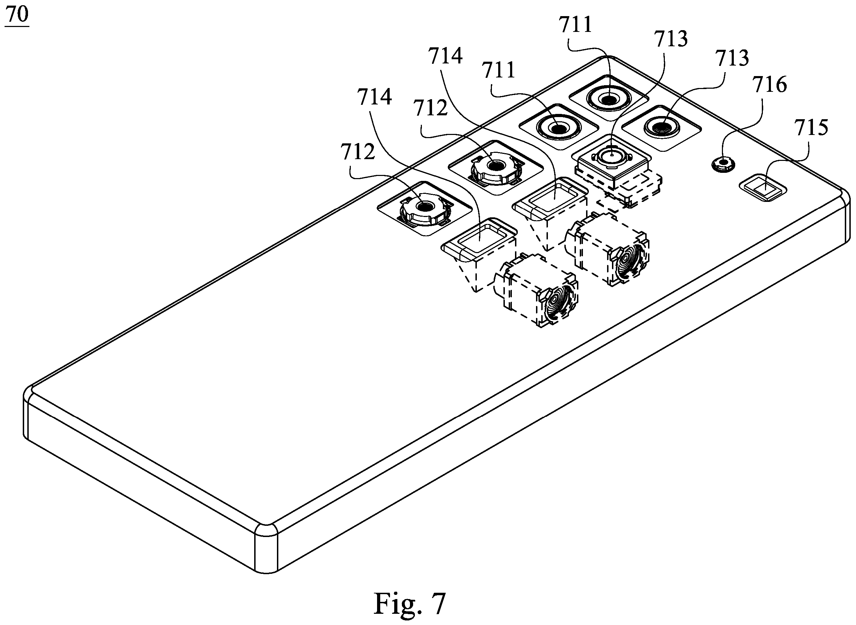

Fig. 7 is a schematic view of an electronic device 70 according to the 7th Example of the present disclosure. In Fig. 7, the electronic device 70 is a smart phone, and the electronic device 70 includes imaging lens assemblies. Moreover, the imaging lens assemblies can be ultra-wide angle imaging lens assemblies 711, wide angle imaging lens assemblies 712, telephoto imaging lens assemblies 713, 714 and a Time-Of-Flight (TOF) module 716. The TOF module 716 can be another type of the imaging lens assembly, and the disposition is not limited thereto. Particularly, each of the imaging lens assemblies can be the imaging lens assembly according to any one of the aforementioned 1st Example to the 5th Example, but the present disclosure is not limited thereto.

Furthermore, the telephoto imaging lens assemblies 714 are configured to fold the light, but the present disclosure is not limited thereto.

To meet a specification of the camera module of the electronic device 70, the electronic device 70 can further include an optical anti-shake mechanism (not shown). Furthermore, the electronic device 70 can further include at least one focusing assisting module (not shown) and at least one sensing element (not shown). The focusing assisting module can be a flash module 715 for compensating a color temperature, an infrared distance measurement component, a laser focus module and so on. The sensing element can have functions for sensing physical momentum and kinetic energy, such as an accelerator, a gyroscope, a Hall Effect element, to sense shaking or jitters applied by hands of the users or external environments. Accordingly, the imaging lens assembly of the electronic device 70 equipped with an auto-focusing mechanism and the optical anti-shake mechanism can be enhanced to achieve the superior image quality. Furthermore, the electronic device 70 according to the present disclosure can have a capturing function with multiple modes, such as taking optimized selfies, High Dynamic Range (HDR) under a low light condition, 4K Resolution recording and so on.

Moreover, all of other component structures and dispositions according to the 7th Example are the same as the component structures and the arrangements according to the 6th Example, and will not be described again herein.

<8th Example>

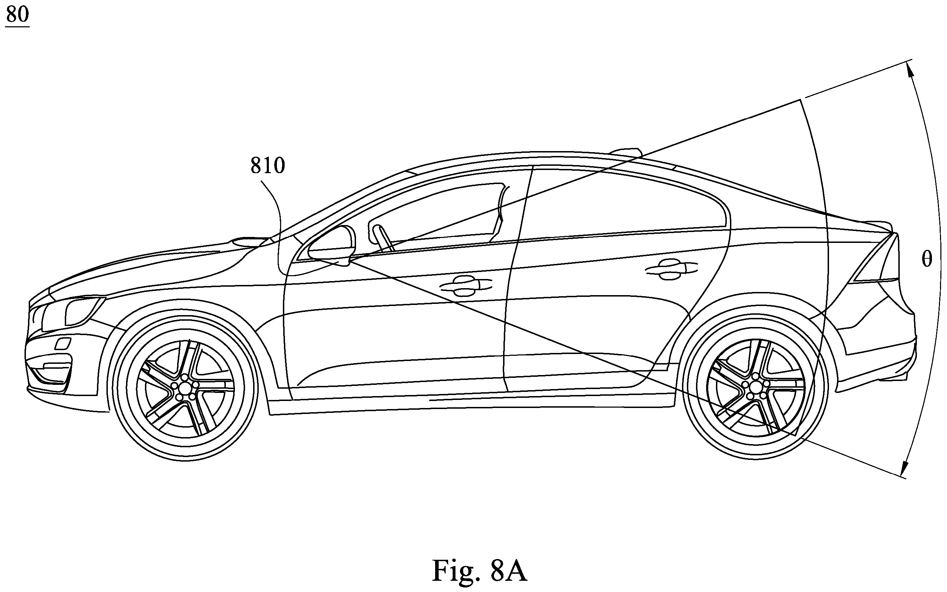

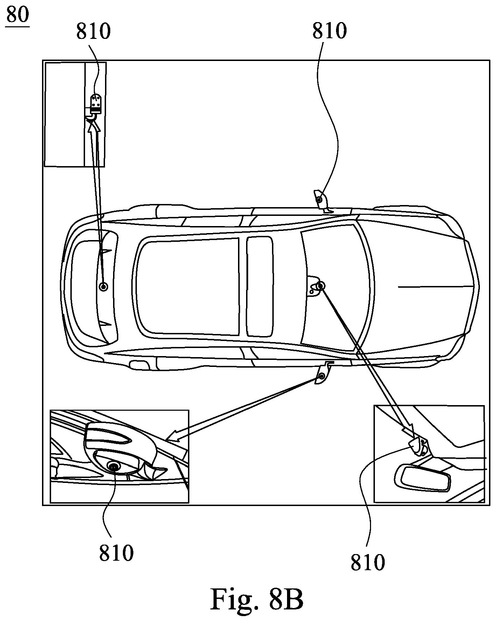

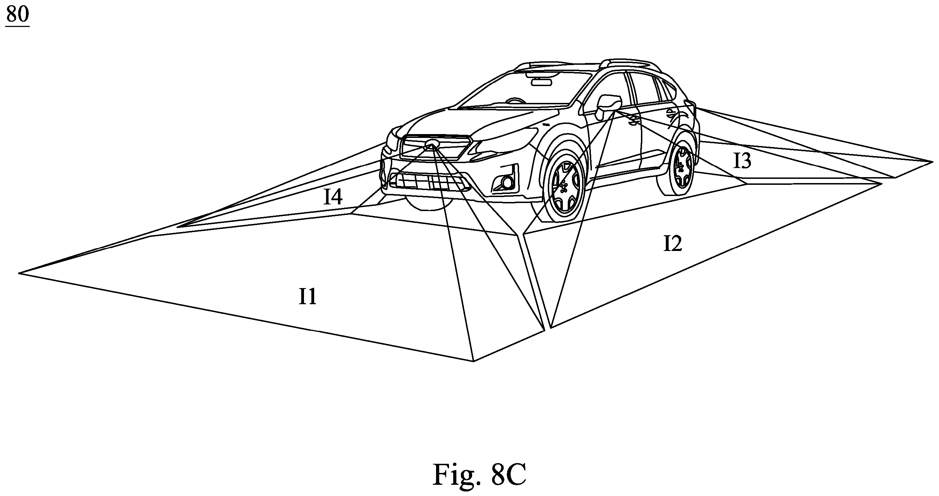

Fig. 8A is a schematic view of an imaging lens assembly 810 applied to a vehicle 80 according to the 8th Example of the present disclosure, Fig. 8B is another schematic view of the imaging lens assemblies 810 configured on the vehicle 80 according to the 8th Example in Fig. 8A, and Fig. 8C is another schematic view of the imaging lens assemblies 810 configured on the vehicle 80 according to the 8th Example in Fig. 8A. In Fig. 8A to Fig. 8C, the electronic device (not shown) applied to the vehicle 80, wherein the electronic device includes the imaging lens assemblies 810. In the 8th Example, a number of imaging lens assemblies 810 is six, the imaging lens assemblies 810 are vehicle imaging lens assemblies, and each of the imaging lens assemblies can be the imaging lens assembly according to any one of the aforementioned 1st Example to the 5th Example, but the present disclosure is not limited thereto.

In Fig. 8A and Fig. 8B, two of the imaging lens assemblies 810 are disposed under a left rearview mirror and a right rearview mirror, respectively, which can be for capturing the image information with a visual angle θ. Particularly, the visual angle θ can satisfy the following condition: 40 degrees < θ < 90 degrees. Therefore, the image information within a left lane and a right lane can be captured.

In Fig. 8B and Fig. 8C, another two of the imaging lens assemblies 810 can be disposed in an inner space of the vehicle 80. It is favorable for the drivers obtaining the external space information in addition to the driving seat, such as the external space informations I1, I2, I3, I4, but the present disclosure is not limited thereto. Specifically, the imaging lens assemblies 810 are disposed close to the rearview mirror inside the vehicle 80 and close to the rear car window, respectively. Moreover, the imaging lens assemblies 810 can be further disposed on the rearview mirrors on the left side and the right side except the mirror surface, respectively, but the present disclosure is not limited thereto.

The imaging lens assemblies 810 can be disposed on a front end of the vehicle 80 and a rear end of the vehicle 80, respectively. Therefore, more visual angles can be provided to reduce the blind spot, so that the driving safety can be improved. Further, the traffic information outside of the vehicle 80 can be recognized by disposing the imaging lens assemblies 810 on the periphery of the vehicle 80, so that the function of the automatic driving assistance can be achieved.

**Claims**

1. An imaging lens assembly (100), **characterized in** comprising:

    an optical element (110), an imaging light (L) passing through the optical element (110), and the optical element (110) having a gate trace (111); and
    an anti-reflecting film (120) disposed on at least portion of a surface of the optical element (110), comprising:

        a nanostructure layer (121) comprising a plurality of ridge-like protrusions (121a) extending non-directionally, wherein a bottom of each of the ridge-like protrusions (121a) is closer to the optical element (110) than a top of each of the ridge-like protrusions (121a) to the optical element (110), and each of the ridge-like protrusions (121a) is tapered from the bottom towards the top; and
        an intermediate layer (122) disposed between the optical element (110) and the nanostructure layer (121), comprising:

            at least two first medium layers; and
            at least one second medium layer, wherein a refractive index of the at least one second medium layer is different from a refractive index of each of the at least two first medium layers, and the at least one second medium layer is disposed between the at least two first medium layers;

    wherein a thickness of each of the at least two first medium layers is LT1, a thickness of the at least one second medium layer is LT2, and the following conditions are satisfied:

$$42 \text{ nm} < LT1 < 112 \text{ nm};$$

    and

$$1 \text{ nm} < LT2 < 35 \text{ nm}.$$

2. The imaging lens assembly (100) of claim 1, wherein the thickness of each of the at least two first medium layers is LT1, and the following condition is satisfied:

$$45 \text{ nm} < LT1 < 90 \text{ nm}.$$

3. The imaging lens assembly (100) of any of claims 1-2, wherein the thickness of the at least one second medium layer is LT2, and the following condition is satisfied:

$$3 \text{ nm} < LT2 < 27 \text{ nm}.$$

4. The imaging lens assembly (100) of any of claims 1-3, wherein the intermediate layer (122) further comprises:

   at least one third medium layer, wherein a refractive index of the at least one third medium layer is different from the refractive index of the at least one second medium layer, and the at least one third medium layer is disposed adjacent to the at least one second medium layer;
   wherein a thickness of the at least one third medium layer is LT3, and the following condition is satisfied:

$$3 \text{ nm} < LT3 < 38 \text{ nm}.$$

5. The imaging lens assembly (100) of any of claims 1-4, wherein the thickness of each of the at least two first medium layers is LT1, the thickness of the at least one third medium layer is LT3, and the following condition is satisfied:

$$2.3 < LT1/LT3 < 9.6.$$

6. The imaging lens assembly (100) of any of claims 1-5, wherein the refractive index of the at least one second medium layer is higher than the refractive index of each of the at least two first medium layers, and the refractive index of the at least one second medium layer is higher than the refractive index of the at least one third medium layer.

7. The imaging lens assembly (100) of any of claims 1-6, wherein a portion of a top of the intermediate layer (122) is exposed to an air.

8. The imaging lens assembly (100) of any of claims 1-7, wherein an average height of the ridge-like protrusions (121a) is larger than 78 nm and less than 308 nm.

9. The imaging lens assembly (100) of any of claims 1-8, wherein a main component of the nanostructure layer (121) is aluminum oxide.

10. The imaging lens assembly (100) of any of claims 1-9, wherein a main component of each of the at least two first medium layers is silicon oxide.

11. The imaging lens assembly (100) of any of claims 1-10, wherein a main component of the at least one second medium layer is titanium oxide.

12. The imaging lens assembly (100) of any of claims 1-11, wherein a main component of the at least one third medium layer is silicon oxide.

13. The imaging lens assembly (100) of any of claim 1-12, wherein an average reflectivity of the at least portion of the surface of the optical element (110) with the nanostructure layer (121) corresponding to a light with a wavelength from 420 nm to 760 nm is R4276, and the following condition is satisfied:

$$0\% < R4276 < 0.2\%.$$

14. The imaging lens assembly (100) of any of claims 1-13, wherein the average reflectivity of the at least portion of the surface of the optical element (110) with the nanostructure layer (121) corresponding to the light with the wavelength from 420 nm to 760 nm is R4276, and the following condition is satisfied:

$$0\% < R4276 < 0.1\%.$$

**15.** The imaging lens assembly (100) of any of claims 1-14, wherein the optical element (110) comprises:
a light diminishing structure (112, 113) configured to form an unevenness on a surface of the optical element (110), wherein the light diminishing structure (112, 113) and the optical element (110) are formed integrally.

**16.** The imaging lens assembly (100) of any of claims 1-15, wherein the light diminishing structure (112, 113) comprises a plurality of protrusions, and the protrusions are arranged regularly.

**17.** The imaging lens assembly (100) of any of claims 1-16, wherein a height of each of the protrusions is larger than 40 $\mu$m and less than 1000 $\mu$m.

**18.** The imaging lens assembly (100) of any of claims 1-17, wherein the height of each of the protrusions is larger than 50 $\mu$m and less than 500 $\mu$m.

**19.** The imaging lens assembly (300) of any of claims 1-18, further comprising:
an adhering component (330) configured to fix the optical element (310).

**20.** An electronic device (60), **characterized in** comprising:
the imaging lens assembly (100) of any of claims 1-19.

Fig. 1A

EP 4 592 717 A1

Fig. 1B

Fig. 1C

Fig. 1D

Fig. 1E

120

110

120

Fig. 1F

Fig. 1G

EP 4 592 717 A1

EP 4 592 717 A1

Fig. 1H

Fig. 2A

EP 4 592 717 A1

Fig. 2B

Fig. 2C

Fig. 3A

Fig. 3B

Fig. 3C

Fig. 3D

Fig. 4A

EP 4 592 717 A1

Fig. 4B

Fig. 5A

EP 4 592 717 A1

Fig. 5B

Fig. 6A

EP 4 592 717 A1

60

623

622

625

624

624

Fig. 6B

EP 4 592 717 A1

Fig. 6C

Fig. 6D

Fig. 6E

Fig. 7

EP 4 592 717 A1

Fig. 8A

80

810

810

810

810

Fig. 8B

Fig. 8C

EP 4 592 717 A1

Europäisches
Patentamt

European
Patent Office

Office européen
des brevets

**EUROPEAN SEARCH REPORT**

Application Number

EP 25 15 2820

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2023/370707 A1 (SU HENG-YI [TW] ET AL) 16 November 2023 (2023-11-16) * paragraph [0122]; figure 4a * | 1-20 | INV. G02B1/115 G02B1/118 G02B5/02 |
| Y | US 2018/011224 A1 (TAKAHASHI HIROKI [JP]) 11 January 2018 (2018-01-11) * paragraphs [0069] - [0071]; figures 5c,12; example 5 * | 1-20 | |
| A | US 2014/177059 A1 (ISHIMATSU RIE [JP] ET AL) 26 June 2014 (2014-06-26) * paragraphs [0034] - [0045]; example 1; table 1 * | 1-20 | |
| A,P | EP 4 425 223 A1 (LARGAN PRECISION CO LTD [TW]) 4 September 2024 (2024-09-04) * paragraph [0032]; figure 1d * | 1-20 | |
| A | US 2012/062995 A1 (MOMOKI KAZUHIKO [JP]) 15 March 2012 (2012-03-15) * figures 5,9 * | 1-20 | TECHNICAL FIELDS SEARCHED (IPC) |
| A | US 2016/061996 A1 (ISHIMATSU RIE [JP]) 3 March 2016 (2016-03-03) * paragraph [0037]; figures 1,2 * | 1-20 | G02B |
| A | US 2012/212827 A1 (KAKEGAWA NORISHIGE [JP]) 23 August 2012 (2012-08-23) * paragraphs [0030] - [0031]; figures 1-4 * | 1-20 | |

The present search report has been drawn up for all claims

| Place of search | Date of completion of the search | Examiner |
|---|---|---|
| Munich | 13 June 2025 | Mollenhauer, Ralf |

EPO FORM 1503 03.82 (P04C01)

## ANNEX TO THE EUROPEAN SEARCH REPORT
## ON EUROPEAN PATENT APPLICATION NO.

EP 25 15 2820

This annex lists the patent family members relating to the patent documents cited in the above-mentioned European search report.
The members are as contained in the European Patent Office EDP file on
The European Patent Office is in no way liable for these particulars which are merely given for the purpose of information.

13-06-2025

| Patent document cited in search report | Publication date | Patent family member(s) | Publication date |
|---|---|---|---|
| US 2023370707 A1 | 16-11-2023 | BR 102023008689 A2 | 28-11-2023 |
| | | CN 117092785 A | 21-11-2023 |
| | | CN 218728306 U | 24-03-2023 |
| | | EP 4276501 A1 | 15-11-2023 |
| | | TW 202344914 A | 16-11-2023 |
| | | US 2023370707 A1 | 16-11-2023 |
| | | US 2025168479 A1 | 22-05-2025 |
| US 2018011224 A1 | 11-01-2018 | CN 107430214 A | 01-12-2017 |
| | | DE 112016001087 T5 | 23-11-2017 |
| | | JP 6255531 B2 | 27-12-2017 |
| | | JP WO2016159290 A1 | 03-08-2017 |
| | | US 2018011224 A1 | 11-01-2018 |
| | | WO 2016159290 A1 | 06-10-2016 |
| US 2014177059 A1 | 26-06-2014 | JP 5885649 B2 | 15-03-2016 |
| | | JP 2014122961 A | 03-07-2014 |
| | | US 2014177059 A1 | 26-06-2014 |
| EP 4425223 A1 | 04-09-2024 | EP 4425223 A1 | 04-09-2024 |
| | | US 2024295721 A1 | 05-09-2024 |
| US 2012062995 A1 | 15-03-2012 | JP 5804683 B2 | 04-11-2015 |
| | | JP 2012063393 A | 29-03-2012 |
| | | US 2012062995 A1 | 15-03-2012 |
| US 2016061996 A1 | 03-03-2016 | JP 6362105 B2 | 25-07-2018 |
| | | JP 2016048296 A | 07-04-2016 |
| | | US 2016061996 A1 | 03-03-2016 |
| US 2012212827 A1 | 23-08-2012 | JP 5511307 B2 | 04-06-2014 |
| | | JP 2011090225 A | 06-05-2011 |
| | | US 2012212827 A1 | 23-08-2012 |
| | | WO 2011048794 A2 | 28-04-2011 |

EPO FORM P0459

For more details about this annex : see Official Journal of the European Patent Office, No. 12/82